# EUROPÄISCHE PATENTSCHRIFT

(11) **EP 1 651 710 B1**
(45) Veröffentlichungstag und Bekanntmachung des Hinweises auf die Patenterteilung: **23.01.2013**
(21) Anmeldenummer: 03818377.8
(22) Anmeldetag: 31.07.2003
(51) Int. Cl.: C08J 7/04, C08K 11/00, B29D 22/00, B65D 23/08, B29C 49/22

(54) **BESCHICHTETER HOHLKÖRPER**
COATED HOLLOW BODY
CORPS CREUX MUNI D'UN REVETEMENT

(43) Veröffentlichungstag der Anmeldung: 03.05.2006
(73) Patentinhaber: Krones AG, 93068 Neutraubling (DE)
(72) Erfinder: HUMELE, Heinz, 93107 Thalmassing (DE); KRONSEDER, Volker, 93073 Neutraubling (DE)
(74) Vertreter: Grünecker, Kinkeldey, Stockmair & Schwanhäusser
(86) Internationale Anmeldenummer: PCT/EP2003/008466
(87) Internationale Veröffentlichungsnummer: WO 2005/021621

(56) Entgegenhaltungen:
- WO-A-00/49072
- WO-A-00/75244
- WO-A1-03/037969
- WO-A1-2004/069906
- US-A- 4 254 170
- US-A- 6 083 585
- US-A1- 2002 197 475

## Beschreibung

Die vorliegende Erfindung betrifft einen beschichteten Hohlkörpern entsprediend Anspruch 1, ein Verfahren zu seiner Herstellung und die Verwendung einer Nanopartikel enthaltenden Zusammensetzung zur Erhöhung der Kratzfestigkeit von mit Barriereschichten versehenen Hohlkörpern.

Lebensmittel und Getränke werden häufig in vorgefertigten Hohlkörpern zum Verkauf bereit gestellt und aufbewahrt. Dabei wird die Art des Hohlkörpers in Abhängigkeit von der Art der Ware und der beabsichtigten Aufbewahrungsdauer ausgewählt. Für Waren mit hoher Sauerstoffempfindlichkeit, wie Babykost, Bier und Säfte sowie für carbonisierte Getränke werden daher häufig Glasflaschen und Dosen ausgewählt. Glas ist jedoch auf Grund seines Eigengewichts und der Stoßempfindlichkeit nachteilig. Dosen sind aufgrund der verschärften Gesetzgebung im Hinblick auf Recycling problematisch. Daher wird versucht, die Glashohlkörper bzw. Dosen durch Kunststoff- bzw. Verbundsystemhohlkörper zu ersetzen. Dabei tritt jedoch das Problem auf, dass viele der kommerziell einsetzbaren Kunststoffe bzw. verbundsysteme eine hohe Gasdurchlässigkeit, sowohl gegenüber Sauerstoff als auch gegenüber Kohlendioxid aufweisen. Eine ausreichende Stabilität der Ware gegenüber Sauerstoffoxidation bzw. Kohlendioxidverlust kann so häufig nicht sichergestellt werden.

Daher wurden Gasbarriereschichten für Hohlkörper aus Kunststoff bzw. Verbundsystemen, insbesondere für Hohlkörper aus PET entwickelt. Durch solche Gasbarriereschichten lassen sich zufriedenstellende Werte für die Gasdurchlässigkeit des Aufbewahrungssystems erreichen, wodurch die vorteilhaften Effekte der Verwendung von Kunststoff oder Verbundsystemen gesichert werden kann.

Werden diese Gasbarriereschichten allerdings auf der Außenseite der Hohlkörper aufgebracht, so ist häufig die notwendige Beständigkeit der Gasbarrierebeschichtung nicht gewährleistet. Viele Gasbarrierematerialien sind entweder wasserlöslich oder mechanisch nicht besonders widerstandsfähig, so dass insbesondere in Getränkeabfüllanlagen mit einem sehr hohen Durchsatz irreversible Beschädigungen der Gasbarriereschichten auftreten können, was die gewünschte Sicherung der Produktqualität beeinträchtigt.

Daher stellt sich die vorliegende Erfindung die Aufgabe, einen Hohlkörper mit verringerter Gasdurchlässigkeit zur Verfügung zu stellen, wobei gleichzeitig sichergestellt ist, dass ein ausreichender Schutz der Gasbarrierebeschichtung erreicht wird. Bevorzugt sollte der erfindungsgemäße Hohlkörper geeignet sein für den Einsatz in Abfüllanlagen mit einem sehr hohen Durchsatz. Die Herstellung des erfindungsgemäßen Hohlkörpers sollte ebenfalls in Anlagen möglich sein, die einen hohen Durchsatz von 20000 Flaschen pro Stunde und mehr ermöglichen, wobei bevorzugt auch zunächst eine Herstellung beschichteter Vorformlinge und anschließendes Blasen einer Flasche möglich sein sollte.

### Beschreibung der Erfindung

Diese Aufgabe wird durch den Hohlkörper nach Anspruch 1 gelöst, bevorzugte Ausführungsformen sind in den Unteransprüchen 2 bis 9 angeführt.

Weiterhin stellt die vorliegende Erfindung ein Verfahren zur Herstellung eines Hohlkörpers zur Verfügung, wie in Anspruch 10 definiert. Bevorzugte Ausführungsformen des Verfahrens ergeben sich aus den Unteransprüchen 11 bis 17.

Darüber hinaus stellt die vorliegende Erfindung die Verwendung einer wie in Anspruch 18 definierten Zusammensetzung zur Erhöhung der Kratzfestigkeit eines Hohlkörpers zur Verfügung. Bevorzugte Ausführungsformen dieser Verwendung sind in den Unteransprüchen 19 und 20 angegeben.

### Detaillierte Beschreibung der Erfindungen

### I. Hohlkörper

Der erfindungsgemäße Hohlkörper kann irgendeine variable Form annehmen, ist jedoch vorzugsweise eine Flasche, ein Vorformling für eine Flasche, ein Becher oder ein zylindrisches Schraubdeckelgefäß.

Der erfindungsgemäße Hohlkörper umfasst mindestens eine Grundkörperschicht. Diese Grundkörperschicht bestimmt die Form des Hohlkörpers. Bevorzugt umfasst diese Grundkörperschicht übliche Materialien, die bereits zur Herstellung von Hohlkörpern verwendet werden. Bevorzugt sind dabei Kunststoffe, wie Polyethylenterephthalat (PET), Polypropylen (PP), Polystyrol (PS), Polyethylen (PE), Ethylenvenylalkohol (EVOH), Ethylenvenylidenchlorid, Ethylenvenylacetatkopulimäre (EVA/PE), Polycarbonat (PC), Polyvinylchlorid (PVC), Polyethylennaphthalat (PEN), Polyamid (PA), biologisch abbaubare polymere,- Cellulose und Cellulosederivate und native Polymere, wie Zellglas und eiweiß- und stärkehaltige Polymere, sowie Copolymere oder Mischungen dieser Kunststoffe. Insbesondere bevorzugt ist PET sowie PET mit eingelagertem Sauerstoff-Scavenger (Sauerstofffresser).

Die Grundkörperschicht kann auch aus Papier, Pappe, Karton sowie Schichtverbundsystemen dieser Materialien mit den oben genannten Kunststoffen oder Schichtverbundsystemen der oben genannten Kunststoffe hergestellt sein. Möglich sind auch beschichtete und laminierte Materialien, wie Papier oder Pappe, laminiert mit einer Aluminiumfolie.

Die Dicke der Grundkörperschicht ist nicht kritisch und wird nach der gewünschten mechanischen Festigkeit des Hohlkörpers ausgewählt.

Besonders bevorzugt im Rahmen der vorliegenden Erfindung ist der Hohlkörper eine Flasche aus PET oder ein Vorformling für eine Flasche aus PET, d. h. ein Hohlkörper der durch Anwendung von Wärme und/oder Druck zu einer Flasche geformt werden kann, z.B. durch eine Streckblasoperation nach Erwärmung.

Die mindestens eine Grundkörperschicht ist auf der Außenoberfläche mit mindestens einer Barriereschicht (Gasbarriereschicht) versehen. Diese Barriereschicht umfasst Materialien, die die Gasdurchlässigkeit der Grundkörperschicht auf einen praktisch akzeptablen Wert einstellen können. Solche Materialien sind dem Fachmann bekannt. Im Rahmen der vorliegenden Erfindung können irgendwelche Materialien zur Herstellung der Barriereschicht verwendet werden, bevorzugt sind jedoch Barriereschichten auf der Grundlage von Polyvinylalkoholen.

Erfindungsgemäß einzusetzende Polyvinylalkohole können die üblichen sein, bevorzugt sind jedoch Polyvinylalkohole mit einem hohen Hydrolysegrad von mehr als 60 Molprozent. Einsetzbar sind auch Polyvinylalkoholcopolymere, beispielsweise mit Ethylen. Bevorzugt sind jedoch Polyvinylalkohole.

Diese Materialien, die prinzipiell zur Erzeugung von Barriereschichten bekannt sind, können in den dem Fachmann bekannten Weisen auf die Grundkörperschicht aufgebracht werden, beispielsweise durch Sprühauftragung oder Tauchauftragung. Bevorzugt ist dabei, dass diese Barriereschicht sich über die gesamte Außenoberfläche der Grundkörperschicht erstreckt. Zur Vereinfachung des Herstellungsverfahrens kann jedoch diese Schicht auch nur auf dem gerade ausgeformten Grundkörperschichtbereich, wie dem zylindrischen Teil einer Flasche, vorgesehen sein, solange die gewünschte Reduktion der Gasdurchlässigkeit erreicht wird.

Die Dicke der Gasbarriereschicht ist nicht kritisch, üblicherweise beträgt sie jedoch lediglich wenige Mikrometer, bevorzugt 0,5 bis 5 und insbesondere bevorzugt 1 bis 3 µm.

Bevorzugt wird die Barriereschicht direkt auf die Grundkörperschicht aufgetragen, die bevorzugt eine PET-Schicht ist. Es können jedoch auch Zwischenschichten vorgesehen werden, wie adhesionsverbessernde Schichten. Alternativ ist die Oberflächenbehandlung einer Grundkörperschicht, beispielsweise zur Erhöhung der Haftung der Barriereschicht möglich. Diese Möglichkeiten, die dazu einzusetzenden Materialien und Verfahren sind dem Fachmann bekannt.

Erfindungsgemäß wird die mit einer Barriereschicht versehene Grundkörperschicht noch mit einer Schutzschicht, nämlich einer kratzfesten Deckschicht versehen. Erfindungsgemäß wird für die Deckschicht eine Füllstoff enthaltende Zusammensetzung eingesetzt, bevorzugt eine Nanopartikel enthaltende oder erzeugende Zusammensetzung, so dass die kratzfeste Schutzschicht mit der notwendigen mechanischen Schutzwirkung erhalten werden kann. Die im folgenden detailliert beschriebenen Materialien für die Schutzschicht werden dabei derart ausgewählt, dass einerseits die gewünschte Schutzwirkung erhalten und andererseits die notwendige Verträglichkeit mit der darunterliegenden Gasbarriereschicht gesichert wird.

Die Dicke der kratzfesten Schutzschicht ist nicht kritisch, jedoch wird aus kommerziellen Überlegungen häufig die dünnstmögliche Ausgestaltung auszuwählen sein. Üblicherweise beträgt die Dicke der Schutzschicht lediglich wenige Mikrometer, bevorzugt 0,5 bis 5 und insbesondere bevorzugt 1 bis 3 µm.

Die erfindungsgemäß einsetzbaren Füllstoffe können irgendwelche sein, auch solche, die bereits in Barrierebeschichtungszusammensetzungen für Hohlkörper eingesetzt wurden, wie z.B. die, offenbart in WO 98/56861 und WO 00/49072, deren Offenbarung im Hinblick auf die einsetzbaren Füllstoffe hier mit umfasst ist. Der erfindungsgemäße Einsatz der Füllstoffe in der Schutzschicht sichert deren gewünschte mechanische Festigkeit, so dass die darunter liegende Gasbarriereschicht bei der Handhabung der Flaschen in Getränkeabfüllanlagen, insbesondere solchen mit hohem Durchsatz (20000 Flaschen pro Stunde und mehr), nicht mehr irreversibel beschädigt wird.

Die Schutzschicht enthält Partikel, die eine Partikelgröße von 0.5 bis 100 nm aufweisen. Diese sogenannten Nanopartikel stellen zum einen die gewünschte mechanische Schutzwirkung zur Verfügung, auf der anderen Seite wird durch den Einsatz dieser sehr kleinen und für das menschliche Auge nicht mehr sichtbaren Partikel das Erscheinungsbild der Flasche nicht beeinträchtigt, da die Nanopartikel nicht zu einer Eintrübung führen. Somit kann bei gleichzeitiger Schutzwirkung der glasklare Eindruck insbesondere einer PET-Flasche beibehalten werden.

Zum Erreichen des erwünschten Effekts der Kratzfestigkeit ist es bevorzugt, wenn der Füllstoff und bevorzugt die Nanopartikel in der Schutzschicht in einer Menge von 3 - 30 Gewichtsprozent enthalten sind, bevorzugt 5 - 25 Gewichtsprozent. Die Art der Füllstoffe ist dabei wie oben ausgeführt nicht kritisch, was auch für die Nanopartikel gilt, und es können Füllstoffe bzw. Nanopartikel auf Basis von Glasmaterialien, Keramikmaterialien, Kunststoffmaterialien oder Metallen eingesetzt werden.

Neben dem Füllstoff, bevorzugt sind dabei die Nanopartikel, enthält die Schutzschicht noch ein anorganisches oder organisches Bindemittel bzw. Bindemittelgemisch.

Als anorganische Bindemittel können Bindemittel silikatischer Natur eingesetzt werden, wie beispielsweise wasserglas, oder Materialien auf Basis von Ethylsilikaten.

Einsetzbar sind auch die sogenannten anorganisch-organischen Hybrid-Polymere, die ein Bindeglied zwischen den rein anorganischen und den rein organischen Bindemitteln darstellen. Die grundliegende Chemie basiert auf Reaktionen, wie sie beispielsweise für die Ethylsilikate bekannt sind, wodurch Strukturen geformt werden, die anorganischem Silikat ähnlich sind. Ausgehend von Alkoxysilanen erfolgt durch Hydrolyse eine teilweise Bildung von Silanolen, bei denen Alkoholreste am Siliciumatom durch OH-Gruppen ersetzt werden. Diese reaktiven verbindungen können mit weiteren Silanen zu Polysiloxanstrukturen umgesetzt werden. Bei dieser Reaktion können auch organische Seitenketten an den Silanverbindungen zu Reaktion gebracht werden, so dass organische Ketten resultieren. Somit erfolgt die Ausgestaltung eines anorganisch-organischen Netzwerkes.

Weiterhin sind organische Systeme als Bindemittel verwendbar, wie Polyesterharze, Alkydharze und vernetzbare Polymersysteme sowie weitere polymere Materialien, wie Polyurethane, Styrolacrylate, Ethylenvinylatcetate und Polyvinylacetale, beispielsweise Polyvinylbutyral.

Bevorzugt für die kratzfeste Schutzschicht sind Nanopartikel auf Silikatbasis enthaltende silikatische Schutzschichten, die z.B. erhalten werden können durch die Aushärtung von Mischungen, die Alkoxysilane und Alkylsilikate enthalten. Die bei der Aushärtung ablaufenden chemischen Reaktionen ergeben zum einen die Nanopartikel und weiterhin ein beständiges und kratzfestes sowie wasserunlösliches Netzwerk. Bevorzugte Schutzschichten werden erhalten aus Mischungen, die Epoxidgruppen-haltige Alkoxysilane und deren Hydrolysate und Kondensate, Tetraalkylsilikate und deren Hydrolysate und Kondensate, wobei Tetraethylsilikat bevorzuggt ist, sowie Pentandion, bevorzugt 2,4-Pentandion, in alkoholischer Lösung enthalten. Als alkoholische Lösungsmittel sind hierbei Ethanol, Propanol (bevorzugt 2-Propanol) und Butanol (bevorzugt 2-Butanol) bevorzugt.

Die bevorzugte Ausführungsform der vorliegenden Erfindung, d.h. Grundkörperschicht aus PET, ggf. mit eingelagertem Sauerstoff-Scavenger, Gasbarriereschicht auf Basis von Polyvinylalkohol und Schutzschicht auf Basis der oben genannten Alkoxysilane und Alkylsilikate macht eine Herstellung eines beschichteten Vorformlings möglich, der anschließend zu einer Flasche geblasen werden kann. Die spezielle Materialauswahl für Gasbarriereschicht und Schutzschicht erlaubt die Durchführung der Blasoperation, wobei sichergestellt ist, dass die auf den Vorformling aufgebrachten Schichten ohne Beschädigung weiterhin die gesamte Oberfläche bedecken.

Die vorliegende Erfindung wird nun unter Verweis auf das erfindungsgemäße Verfahren weiter beschrieben werden. In diesen Zusammenhang wird angeführt, dass die oben im Zusammenhang mit dem erfindungsgemäßen Hohlkörper als bevorzugt bezeichneten Ausgestaltungen auch bevorzugt sind im Hinblick auf das erfindungsgemäße verfahren. Daher wird zur Vermeidung unnötiger Wiederholungen im Zusammenhang mit dem Verfahren nur noch auf bevorzugte Verfahrensausgestaltungen bezug genommen.

### II. Verfahren zur Herstellung des Hohlkörpers

Im erfindungsgemäßen Verfahren wird ein Hohlkörper, umfassend mindestens eine Grundkörperschicht, mit mindestens einer Barriereschicht (Gasbarriereschicht) und mindestens einer Schutzschicht versehen. Für die Grundkörperschicht, die Barriereschicht und die Schutzschicht gilt das oben im Zusammenhang mit dem Hohlkörper im Hinblick auf Materialien ausgeführte.

Die Barriereschicht und die Schutzschicht können durch geeignete und dem Fachmann bekannte Verfahren direkt auf die Grundkörperschicht bzw. auf die Barriereschicht aufgebracht werden.

Dazu kann beispielsweise die Grundkörperschicht, bevorzugt aus PET, insbesondere mit eingelagertem Sauerstoff-Scavenger, zunächst mit einer Barriereschicht versehen werden, beispielsweise durch Sprühauftragung oder Tauchauftragung. Anschließend erfolgt die Auftragung der Schutzschicht auf die Barriereschicht, so dass ein insgesamt mindestens dreischichtiger Aufbau resultiert. Wie oben ausgeführt können durch bekannte Verfahrensweisen zwischen den wesentlichen Schichten des Hohlkörpers der vorliegenden Erfindung Zwischenschichten vorgesehen werden; alternativ können die Oberflächen vor Aufbringung der darauf folgenden Schicht behandelt werden, z. B. zur Erhöhung der Haftung der folgenden Schichten. Die dazu notwendigen Verfahren und Vorrichtungen sind dem Fachmann bekannt.

Erfindungsgemäß besonders bevorzugt ist es zur Aufbringung der Barriereschicht ein Beschichtungsmittel auf Polyvinylalkoholbasis in wässriger Lösung von 5 bis 10 Gewichtsprozent zu verarbeiten, gegebenenfalls unter Zusatz von Ethanol. Eine derartige Verfahrensweise ermöglicht, dass beispielsweise mit einem einzigen Rotationszerstäuber in zwei bis drei Sekunden eine-gleichmäßige Beschichtung von eins bis fünf Mikrometer aufgebracht werden kann, bei einer Leistung von ca. zwanzigtausend Flaschen pro Stunde.

Nachdem die beispielsweise wie oben aufgebrachte Barriereschicht ausreichend trocken zur weiteren Verarbeitung ist, kann die erfindungsgemäße Schutzschicht aufgebracht werden.

Dazu wird erfindungsgemäß eine ausreichend dünnflüssige Mischung bereitgestellt, vorzugsweise umfassend die Nanopartikel mit mindestens einem wie oben definierten Bindemittel. Dann wird durch Sprühauftragung oder Tauchauftragung diese Mischung auf den Hohlkörper, versehen mit einer Barriereschicht, aufgebracht.

Nach der Aufbringung der Beschichtungszusammensetzung für die Schutzschicht erfolgt die Trocknung/Aushärtung der Schutzschicht, was in Abhängigkeit von der Zusammensetzung der Schutzschichtbeschichtungszusammensetzung durch Trocknung, Hydrolyse oder UV-Aushärtung erfolgen kann.

Bevorzugt wird im erfindungsgemäßen Herstellungsverfahren zunächst eine Gasbarriereschicht auf Basis von Polyvinylalkohol aufgebracht. Diese Schicht wird anschließend leicht getrocknet, so dass eine weitere Handhabung der beschichteten Hohlkörper möglich ist, ohne dass die aufgebrachte Schicht durch leichte Berührungen wieder beschädigt wird. Eine vollständige Trocknung ist zu diesem Zeitpunkt allerdings weder notwendig noch erwünscht. Durch diese spezielle Ausgestaltung behält die aufgebrachte Gasbarriereschicht eine ausreichende Flexibilität, bei gleichzeitiger ausreichenden Festigkeit für die weitere Verarbeitung, was insbesondere dann von vorteil ist, wenn die Gasbarriereschicht auf einen Vorformling für eine PET-Flasche aufgebracht wurde, der nach der Beschichtungsoperation noch zu einer Flasche geblasen werden soll.

Nach dem Aufbringen der Gasbarriereschicht erfolgt die Anwendung der Mischung, die die kratzfeste Schutzschicht ergibt. Diese Mischung wird bevorzugt auf die angetrocknete aber noch nicht vollständig ausgehärtete Gasbarriereschicht aufgebracht. Bevorzugt umfasst die einzusetzende Mischung für die Schutzschicht Alkoxysilane und Alkylsilikate, die nach der Auftragung durch Trocknungsoperationen eine Nanopartikel enthaltende Schutzschicht ergeben. Eine besonders bevorzugte Beschichtungslösung (1) für die Schutzschicht hat folgende Zusammensetzung:
ca. 16 Gew.-% Epoxidgruppen-haltiges Alkoxysilan sowie dessen Hydrolysate und Kondensate;
ca. 5,5 Gew.-% Tetraethylsilikat sowie dessen Hydrolysate und Kondensate;
ca. 0,5 Gew.-% 2,4-Pentandion;
ca. 15 Gew.-% 2-Butanol;
ca. 63 Gew.-% Ethanol und 2-Propanol in einem Verhältnis von ca. 1:2,5

Bevorzugt wird dabei das erfindungsgemäße Verfahren so ausgestaltet, dass auch die Schutzschicht zunächst nur soweit getrocknet wird, dass eine weitere Handhabung des beschichteten Hohlkörpers ohne Beschädigung der Schutzschicht möglich ist, ohne dass jedoch eine vollständige Aushärtung erreicht wurde. Insbesondere bei der Beschichtung von Vorformlingen für PET-Flaschen wird so sichergestellt, dass das anschließende Blasen der PET-Flasche ohne Beschädigung der Schutzschicht erfolgen kann. Erst nach der Formung der Flasche aus dem Vorformling erfolgt dann die endgültige Trocknung/Aushärtung der Schutzschicht, in Abhängigkeit von den Materialien dieser Schichten durch Trocknung und/oder UV-Aushärtung.

Durch diese besonders bevorzugte Verfahrensführung können große Zahlen an Hohlkörpern sicher beschichtet werden, ohne dass in den darauffolgenden Befüllungsoperationen usw. eine Beschädigung der aufgebrachte Schichten zu befürchten ist.

### III. Verwendung

Die vorliegende Erfindung stellt darüber hinaus die Verwendung einer wie in Anspruch 15 definierten Zusammensetzung zur Erhöhung der Kratzfestigkeit eines Hohlkörpers zur Verfügung. Bevorzugte Ausgestaltungen der Verwendung ergeben sich aus den oben angeführten Erläuterungen zum erfindungsgemäßen Hohlkörper und Verfahren, die hier durch Verweis mit umfasst sind.

Der Einsatz dieser Zusammensetzung ermöglicht, wie bereits vorstehend ausgeführt, die Erzeugung einer kratzfesten Schutzschicht auf Hohlkörpern, was die darunter liegende Gasbarriereschicht vor Beschädigung schützt. Durch die erfindungsgemäße Verwendung kann so überraschend eine ausreichende Schutzwirkung für eine Gasbarriereschicht erhalten werden, so dass der Einsatz der so geschützten Hohlkörper, z.B. PET-Flaschen, in Abfüllanlagen mit einem hohen Durchsatz von 20000 Flaschen pro Stunde möglich wird. Gleichzeitig wird eine gute Verträglichkeit mit der Gasbarriereschicht erreicht und eine gute Produktionseignung auch für Herstellungsverfahren gesichert, die z.B. Vorformlinge für PET-Flaschen beschichten und dann zu Flaschen blasen.

Die Kratzfestigkeit kann durch bekannte Verfahren bestimmt werden, wie ISO 1518 (1992), den Taper Abraser Test sowie ein Verfahren, das den sogenannten "Calo Tester" der Firmal BAQ GmbH einsetzt. Dabei rotiert eine Kugel mit einem Durchmesser von drei Zentimetern auf der zu testenden Oberfläche; nach drei Minuten kann die eingeschmirgelte Kalotte durch ein Mikroskop ausgemessen werden, was den Verschleißwert und damit ein Maß für die Kratzfestigkeit ergibt.

Durch die erfindungsgemäße Verwendung lässt sich eine hohe Kratzfestigkeit der beschichteten Hohlkörper erreichen, so dass ein Befüllen der beschichtete Hohlkörper in einer Abfüllanlage mit einem hohen Durchsatz (20000 Flaschen pro Stunde und mehr) ohne Beschädigung der Schutzschicht und der darunter liegenden Gasbarriereschicht auftritt.

Das nachfolgende Beispiel erläutert die vorliegende Erfindung weiter.

### IV. Beispiel

Übliche gespritzte Vorformlinge für PET-Flaschen mit fertig ausgeformtem Gewinde und Tragring wurden zunächst im Bereich unterhalb des Tragrings, der später zum Flaschenkörper ausgeformt wird, mit einer Polyvinylalkoholbeschichtungslösung für die Erzeugung einer Gasbarriereschicht besprüht (aufgebrachte Menge war so bemessen, dass eine Schichtdicke von ca. 2 µm für die Flasche erhalten werden kann). Anschließend wurde soweit getrocknet, dass eine weitere Handhabung der beschichteten Vorformlinge ohne Beschädigung der aufgebrachten Polyvinylalkoholschicht möglich ist. Anschließend wurde eine Beschichtungslösung für die Schutzschicht aufgebracht, die die oben angegebene Zusammensetzung aufwies (siehe Beschichtungslösung (1)). Die aufgebrachte Menge dieser Beschichtungslösung war wiederum so bemessen, dass eine Schichtdicke von ca. 2 µm für die Flasche erhalten werden kann. Auch diese Beschichtung wurde getrocknet, so dass eine weitere Handhabung, ein Transport zum Flaschenhersteller, eine Zwischenlagerung usw. der Vorformlinge ohne Beschädigung der aufgebrachten Schichten möglich ist. Eine vollständige Trocknung/Aushärtung erfolgte jedoch nicht, insbesondere wurde zu diesem Zeitpunkt noch keine UV-induzierte Aushärtung durchgeführt. Anschließend erfolgte das Streckblasen von Flaschen, durch ein übliches Verfahren. Daraufhin wurden die aufgetragenen Schichten getrocknet und die Schutzschicht mit UV-Bestrahlung ausgehärtet. Als Resultat wurden PET-Flaschen mit einer Gasbarriereschicht und einer Nanopartikel enthaltenden Schutzschicht erhalten. Beide Schichten wiesen nach dem Flaschenblasen keine Beschädigungen auf, was die gute Dehnbarkeit der Schichten demonstriert. Die Flaschen zeigten ein klares Erscheinungsbild ohne Eintrübungen und waren kratzfest, so dass durch den Einsatz dieser Flaschen in einer Abfüllanlage mit einem hohen Durchsatz keine Beschädigungen erzeugt wurden. Die Gasbarriereeigenschaften der Polyvinylalkoholbeschichtung wurden nicht beeinträchtigt.

Bei Verwendung eines Materials für die Grundkörperschicht, das einen Anteil eines üblichen Sauerstoff-Scavengers enthält, wird eine weitere Verlängerung der Haltbarkeit (shelf life) des im Hohlkörper verpackten Produkts ermöglicht. Dabei verhindert die füllstoffhaltige Schutzschicht sowohl Beschädigungen der Barriereschicht als auch Beschädigungen der Grundkörperschicht bzw. des darin eingelagerten Sauerstoff-Scavengers, so dass dieser optimal wirken kann. Eine entsprechend ausgestattete PET-Flasche ist in idealer Weise für Bier und ähnliche sauerstoffempfindliche Getränke geeignet und ermöglicht eine Haltbarkeitsdauer ähnlich einer Glasflasche.

Bei Verwendung eines Polyestermaterials für die Grundkörperschicht ist als Sauerstoff-Scavenger beispielsweise ein Anteil an Polyolefinoligomer-Segmenten geeignet, wie in der US-Patentschrift 6,083,585 beschrieben. Bevorzugt sind Polyolefinoligomere aus der Gruppe Polypropylene, Polypentene, Polybutadiene sowie Mischungen davon. Auch alle anderen Sauerstoff-Scavenger sind einsetzbar, abhängig vom Material der Grundkörperschicht.

## Patentansprüche

1. Hohlkörper zum Aufbewahren von Lebensmitteln und Getränken, oder einem Vorformling davon, umfassend mindestens eine Grundkörperschicht und auf der Außenoberfläche davon mindestens eine Barriereschicht, die mit mindestens einer Nanopartikel enthaltenden Schutzschicht versehen ist, wobei die in der Schutzschicht enthaltenen Nanopartikel eine Größe von 0,5 - 100 nm aufweisen.

2. Hohlkörper nach Anspruch 1, wobei das Material für die mindestens eine Grundkörperschicht ausgewählt ist aus der Gruppe Kunststoff, Papier, Pappe, Karton und Schichtverbundsystemen dieser Materialien.

3. Hohlkörper nach Anspruch 1 oder 2, wobei das Material für die mindestens eine Grundkörperschicht ausgewählt ist unter Kunststoffen, bevorzugt PET.

4. Hohlkörper nach einem der Ansprüche 1 bis 3, wobei das Material für die mindestens eine Grundkörperschicht einen Sauerstoff-Scavenger enthält.

5. Hohlkörper nach einem der Ansprüche 1 bis 4, wobei die mindestens eine Barriereschicht Polyvinylalkohol umfasst.

6. Hohlkörper nach mindestens einem der Ansprüche 1 bis 5, wobei die mindestens eine Schutzschicht Nanopartikel in einem anorganischen oder organischen Bindemittel umfasst.

7. Hohlkörper nach mindestens einem der vorstehenden Ansprüche, wobei der Hohlkörper eine Flasche oder ein Vorformling dafür ist und die Grundkörperschicht aus PET ist.

8. Hohlkörper nach Anspruch 7, wobei die Grundkörperschicht einen Sauerstoff-Scavenger enthält.

9. Verfahren zur Herstellung eines Hohlkörpers zum Aufbewahren von Lebensmitteln und Getränken, oder einem Vorformling davon, umfassend: zur Verfügungstellen eines Hohlkörpers, umfassend mindestens eine Grundkörperschicht, Aufbringen, auf die Außenoberfläche davon, mindestens eine Barriereschicht und Aufbringen mindestens einer Nanopartikel enthaltenden Schutzschicht, wobei die in der Schutzschicht enthaltenen Nanopartikel eine Größe von 0,5 -100 nm aufweisen.

10. Verfahren nach Anspruch 9, wobei das Material für die mindestens eine Grundkörperschicht ausgewählt ist aus der Gruppe Kunststoff, Papier, Pappe, Karton und Schichtverbundsystemen dieser Materialien.

11. Verfahren nach Anspruch 10, wobei das Material für die mindestens eine Grundkörperschicht ausgewählt ist unter Kunststoffen, bevorzugt PET.

12. Verfahren nach Anspruch 11, wobei das Material für die mindestens eine Grundkörperschicht einen Sauerstoff- Scavenger enthält.

13. Verfahren nach einem der Ansprüche 9 bis 12, wobei die mindestens eine Barriereschicht Polyvinylalkohol umfasst.

14. Verfahren nach einem der Ansprüche 9 bis 13, wobei die mindestens eine Schutzschicht Nanopartikel in einem anorganischen oder organischen Bindemittel umfasst.

15. Verfahren nach einem der Ansprüche 9 bis 14, wobei der Hohlkörper eine Flasche oder ein Vorformling dafür ist und die Grundkörperschicht aus PET ist.

16. Verfahren nach Anspruch 15, **dadurch gekennzeichnet, dass** auf einen Vorformling eine Polyvinylalkohol enthaltende Barriereschicht aufgebracht und getrocknet wird, dann auf die Barriereschicht eine Nanopartikel enthaltende Schutzschicht aufgebracht und getrocknet wird, dann der beschichtete Vorformling erwärmt und durch Streckblasen zu einer Flasche geformt wird und dann die Schutzschicht durch UV-Bestrahlung ausgehärtet wird.

17. Verwendung einer Zusammensetzung, umfassend Nanopartikel und ein anorganisches oder organisches Bindemittel zur Erhöhung der Kratzfestigkeit eines mit einer Barriereschicht versehenen Hohlkörpers zum Aufbewahren von Lebensmitteln und Getränken, oder einem Vorformling davon, wobei die in der Schutzschicht enthaltenen Nanopartikel eine Größe von 0,5 bis 100 nm aufweisen.

18. Verwendung nach Anspruch 17, wobei die Nanopartikel eine Größe von 10-100 nm aufweisen.

19. Verwendung nach Anspruch 17 oder 18, wobei die Nanopartikel in der Zusammensetzung in einer Menge von 5 - 25 Gewichtsprozent enthalten sind.

## Claims

1. Hollow body for storing foodstuffs and beverages, or a preform thereof, comprising at least one base body layer and on the outer surface thereof at least one barrier layer which is provided with at least one protective layer containing nanoparticles, wherein the nanoparticles contained in the protective layer have a size of 0.5 - 100 nm.

2. Hollow body according to claim 1, wherein the material for the at least one base body layer is selected from the group consisting of plastic, paper, card, cardboard and layer composite systems of said materials.

3. Hollow body according to claim 1 or 2, wherein the material for the at least one base body layer is selected from among plastics, preferably PET.

4. Hollow body according to one of claims 1 to 3, wherein the material for the at least one base body layer contains an oxygen scavenger.

5. Hollow body according to one of claims 1 to 4, wherein the at least one barrier layer comprises polyvinyl alcohol.

6. Hollow body according to at least one of claims 1 to 5, wherein the at least one protective layer comprises nanoparticles in an inorganic or organic binder.

7. Hollow body according to at least one of the preceding claims, wherein the hollow body is a bottle or a preform thereof and the base body layer is made from PET.

8. Hollow body according to claim 7, wherein the base body layer contains an oxygen scavenger.

9. Method for producing a hollow body for storing foodstuffs and beverages, or a preform thereof, which method comprises: providing a hollow body comprising at least one base body layer, applying to the outer surface thereof at least one barrier layer, and applying at least one protective layer containing nanoparticles, wherein the nanoparticles contained in the protective layer have a size of 0.5 - 100 nm.

10. Method according to claim 9, wherein the material for the at least one base body layer is selected from the group consisting of plastic, paper, card, cardboard and layer composite systems of said materials.

11. Method according to claim 10, wherein the material for the at least one base body layer is selected from among plastics, preferably PET.

12. Method according to claim 11, wherein the material for the at least one base body layer contains an oxygen scavenger.

13. Method according to one of claims 9 to 12, wherein the at least one barrier layer comprises polyvinyl alcohol.

14. Method according to one of claims 9 to 13, wherein the at least one protective layer comprises nanoparticles in an inorganic or organic binder.

15. Method according to one of claims 9 to 14, wherein the hollow body is a bottle or a preform thereof and the base body layer is made from PET.

16. Method according to claim 15, **characterised in that** a barrier layer containing polyvinyl alcohol is applied to a preform and dried, then a protective layer containing nanoparticles is applied to the barrier layer and dried, then the coated preform is heated and is shaped into a bottle by stretch blow moulding and then the protective layer is cured by UV irradiation.

17. Use of a composition, comprising nanoparticles and an inorganic or organic binder, to increase the scratch resistance of a hollow body provided with a barrier layer for storing foodstuffs and beverages, or a preform thereof, wherein the nanoparticles contained in the protective layer have a size of 0.5 - 100 nm.

18. Use according to claim 17, wherein the nanoparticles have a size of 10 - 100 nm.

19. Use according to claim 17 or 18, wherein the nanoparticles are contained in the composition in a proportion of 5 - 25% by weight.

## Revendications

1. Corps creux pour la conservation d'aliments et de boissons, ou préforme de celui-ci, comprenant au moins une couche de corps de base et, sur la surface extérieure de celle-ci, au moins une couche barrière qui est pourvue d'au moins une couche de protection contenant des nanoparticules, étant précisé que les nanoparticules contenues dans la couche de protection ont une taille de 0,5-100 nm.

2. Corps creux selon la revendication 1, étant précisé que le matériau pour la ou les couches de corps de base est choisi dans le groupe constitué par les matières plastiques, le papier, le carton, le cartonnage et les systèmes composites stratifiés de ces matériaux.

3. Corps creux selon la revendication 1 ou 2, étant précisé que le matériau pour la ou les couches de corps de base est choisi parmi les matières plastiques, de préférence le PET.

4. Corps creux selon l'une des revendications 1 à 3, étant précisé que le matériau pour la ou les couches de corps de base contient un éliminateur d'oxygène.

5. Corps creux selon l'une des revendications 1 à 4, étant précisé que la ou les couches barrières comprennent du poly(alcool) vinylique.

6. Corps creux selon l'une au moins des revendications 1 à 5, étant précisé que la ou les couches de protection comprennent des nanoparticules dans un liant inorganique ou organique.

7. Corps creux selon l'une au moins des revendications précédentes, étant précisé que le corps creux est constitué par une bouteille ou une préforme pour celui-ci, et que la couche de corps de base est en PET.

8. Corps creux selon la revendication 7, étant précisé que la couche de corps de base contient un éliminateur d'oxygène.

9. Procédé pour fabriquer un corps creux pour la conservation d'aliments et de boissons ou une préforme de celui-ci, comprenant les étapes qui consistent : à fournir un corps creux comprenant au moins une couche de corps de base, à appliquer sur la surface extérieure de celui-ci au moins une couche barrière, et à appliquer au moins une couche de protection contenant des nanoparticules, étant précisé que les nanoparticules contenues dans la couche de protection ont une taille de 0,5-100 nm.

10. Procédé selon la revendication 9, étant précisé que le matériau pour la ou les couches de corps de base est choisi dans le groupe constitué par les matières plastiques, le papier, le carton, le cartonnage et les systèmes composites stratifiés de ces matériaux.

11. Procédé selon la revendication 10, étant précisé que le matériau pour la ou les couches de corps de base sont choisies parmi les matières plastiques, de préférence le PET.

12. Procédé selon la revendication 11, étant précisé que le matériau pour la ou les couches de corps de base contiennent un éliminateur d'oxygène.

13. Procédé selon l'une des revendications 9 à 12, étant précisé que la ou les couches barrières comprennent du poly(alcool) vinylique.

14. Procédé selon l'une des revendications 9 à 13, étant précisé que la ou les couches de protection comprennent des nanoparticules dans un liant inorganique ou organique.

15. Procédé selon l'une des revendications 9 à 14, étant précisé que le corps creux est constitué par une bouteille ou une préforme pour celui-ci, et que la couche de corps de base est en PET.

16. Procédé selon la revendication 15, étant précisé qu'une couche barrière contenant un poly(alcool) vinylique est appliquée sur une préforme et est séchée, puis une couche de protection contenant des nanoparticules est appliquée sur la couche barrière et est séchée, puis la préforme revêtue est chauffée et transformée par étirage-soufflage en bouteille, puis la couche de protection est durcie grâce à une exposition à des UV.

17. Utilisation d'une composition comprenant des nanoparticules et un liant inorganique ou organique, pour accroître la résistance aux éraflures d'un corps creux pourvu d'une couche barrière et destiné à la conservation d'aliments et de boissons, ou d'une préforme de celui-ci, étant précisé que les nanoparticules contenues dans la couche de protection ont une taille de 0,5 à 100 nm.

18. Utilisation selon la revendication 17, étant précisé que les nanoparticules ont une taille de 10-100 nm.

19. Utilisation selon la revendication 17 ou 18, étant précisé que les nanoparticules sont contenues dans la composition à raison de 5-25 % en poids.
